# EUROPEAN PATENT SPECIFICATION

(11) **EP 3 053 889 B1**
(45) Date of publication and mention of the grant of the patent: **28.08.2019**
(21) Application number: 14846977.8
(22) Date of filing: 30.09.2014
(51) Int. Cl.: C03C 27/12, B32B 27/30, C08L 29/14

(54) **INTERMEDIATE FILM FOR LAMINATED GLASS, AND LAMINATED GLASS**
ZWISCHENFOLIE FÜR VERBUNDGLAS UND VERBUNDGLAS
FILM INTERMÉDIAIRE POUR VERRE FEUILLETÉ, ET VERRE FEUILLETÉ

(30) Priority: 30.09.2013 JP 2013205106
(43) Date of publication of application: 10.08.2016
(73) Proprietor: Sekisui Chemical Co., Ltd., Osaka-shi, Osaka 530-8565 (JP)
(72) Inventor: YOSHIDA, Shougo, Kouka-shi, Shiga 528-8585 (JP); IWAMOTO, Tatsuya, Kouka-shi, Shiga 528-8585 (JP); SHIMAMOTO, Michio, Hasuda-shi, Saitama 349-0198 (JP)
(74) Representative: Ter Meer Steinmeister & Partner
(86) International application number: PCT/JP2014/076146
(87) International publication number: WO 2015/046587

(56) References cited:
- EP-A1- 0 566 890
- WO-A1-2006/013944
- WO-A1-2006/092923
- WO-A1-2013/118890
- JP-A- 2007 039 300
- JP-A- 2011 064 039

## Description

### TECHNICAL FIELD

The present invention relates to an interlayer film for laminated glass used for laminated glass. Moreover, the present invention relates to laminated glass prepared with the interlayer film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an interlayer film for laminated glass between a pair of glass plates.

As an example of the interlayer film for laminated glass, Patent Document 1 below discloses an interlayer film having a low tendency to yellowing, having high transmittance for UV-A rays and visible light, and having low transmittance for UV-B rays. This interlayer film includes a polyvinyl acetal, a plasticizer and an oxanilide-based compound as a UV absorber. Moreover, Patent Document 1 describes that the interlayer film may include a HAS/HALS/NOR-HALS type non-aromatic light stabilizer.

Patent Document 2 below discloses an interlayer film which is high in ultraviolet ray blocking characteristics and capable of maintaining the optical quality over a long period of time. This interlayer film includes a polymer layer. The polymer layer includes a tungsten oxide agent and at least one kind among a molecule having a benzotriazole group and a polyvalent metal salt.

Patent Document 3 below discloses an interlayer film with which the sound insulating properties in a high frequency area of laminated glass can be enhanced over a wide temperature range. This interlayer film is provided with a first layer including a polyvinyl acetal resin and a plasticizer, a second layer being layered on a first surface of the first layer and including a polyvinyl acetal resin and a plasticizer, and a third layer being layered on a second surface opposite to the first surface of the first layer and including a polyvinyl acetal resin and a plasticizer. In this interlayer film, the hydroxyl content of the polyvinyl acetal resin included in the first layer is lower than each of the hydroxyl contents of the polyvinyl acetal resins included in the second and third layers, and the ratio of the thickness of the first layer to the total thickness of the second layer and the third layer is less than or equal to 0.14. Moreover, Patent Document 3 describes that laminated glass can be obtained in which the generation of foaming and the growth of bubbles can be suppressed.

### Related Art Document

### Patent Documents

Patent Document 1: US 2012/0052310 A1
Patent Document 2: US 2009/0035583 A1
Patent Document 3: WO 2012/043816 A1
   EP 0 566 890 A1, JP 2011 064039 A and JP 2007 039300 A also disclose interlayer films for laminated glass.

### SUMMARY OF THE INVENTION

### PROBLEMS TO BE SOLVED BY THE INVENION

At the end part of a sheet of laminated glass prepared with a conventional interlayer film, a gap is sometimes generated. In particular, this gap is easily generated when light, heat and the like are given to the sheet of laminated glass. This gap is a recess portion formed by the omission of the interlayer film at the end part of the sheet of laminated glass. This gap is different from a foamed product generated due to the foaming as described in Patent Document 3.

When a gap is generated at the end part of the sheet of laminated glass, the appearance of the laminated glass is deteriorated and the adhesive force between the interlayer film and a glass plate or the like is lowered.

Moreover, when a sheet of laminated glass is prepared with a conventional interlayer film, the yellow index (YI) value measured at the end part of the sheet of laminated glass is sometimes increased.

An object of the present invention is to provide an interlayer film for laminated glass in which a gap is difficult to be generated at the end part of the sheet of laminated glass and an increase in the YI value measured at the end part of the sheet of laminated glass can be suppressed. Moreover, the present invention is also aimed at providing laminated glass prepared with the interlayer film for laminated glass.

### MEANS FOR SOLVING THE PROBLEMS

According to a broad aspect of the present invention, there is provided an interlayer film for laminated glass having a one-layer structure or a two or more-layer structure, as defined in appended claim 1. Specific aspects of the present invention are defined in claims 2-8.

According to a broad aspect of the present invention, there is provided laminated glass including a first laminated glass member, a second laminated glass member and the interlayer film for laminated glass as defined in any of claims 1-8, wherein the interlayer film for laminated glass is arranged between the first laminated glass member and the second laminated glass member.

### EFFECT OF THE INVENTION

Since the interlayer film for laminated glass according to the present invention has a more than two-layer structure and includes a polyvinyl acetal resin, a plasticizer, a hindered amine light stabilizer and an oxidation inhibitor containing phosphorus in the interlayer film as a whole, a gap is difficult to be generated at the end part of a sheet of laminated glass prepared with the interlayer film for laminated glass according to the present invention and an increase in the YI value measured at the end part of the sheet of laminated glass can be suppressed.

### BRIEF DESCRIPTION OF DRAWINGS

Fig. 1 is a partially cut-away cross-sectional view schematically showing an interlayer film for laminated glass in accordance with one embodiment of the present invention.
Fig. 2 is a partially cut-away cross-sectional view schematically showing an interlayer film for laminated glass which is not in accordance with an embodiment of the present invention.
Fig. 3 is a partially cut-away cross-sectional view schematically showing an example of laminated glass prepared with the interlayer film for laminated glass shown in Fig. 1

### MODE(S) FOR CARRYIG OUT THE INVENTION

Hereinafter, the present invention will be described with reference to drawings based on specific embodiments and examples of the present invention.

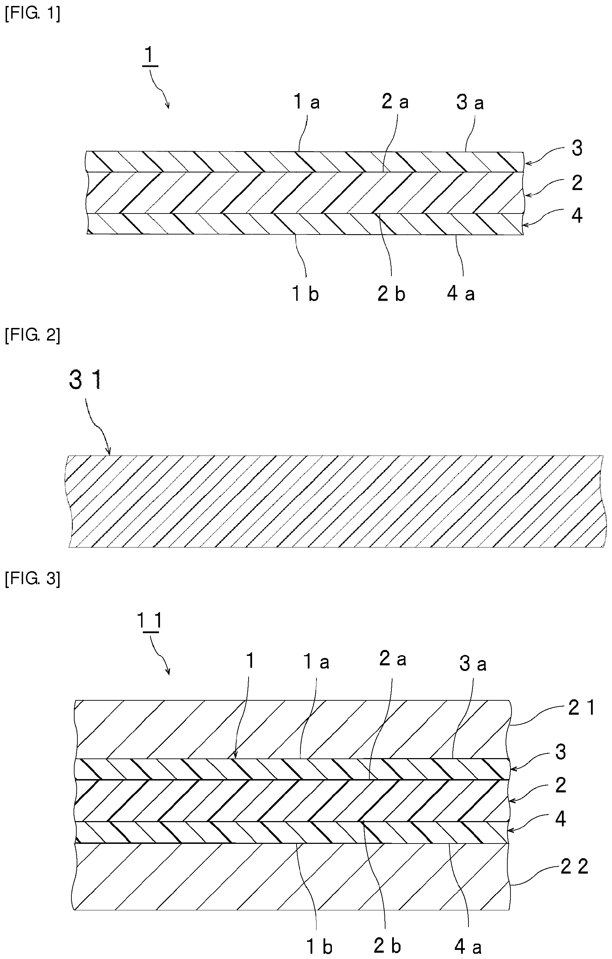

Fig. 1 shows an interlayer film for laminated glass in accordance with one embodiment of the present invention schematically represented as a partially cut-away cross-sectional view.

An interlayer film 1 shown in Fig. 1 is a multi-layered interlayer film having a two or more-layered structure. The interlayer film 1 is used for obtaining laminated glass. The interlayer film 1 is an interlayer film for laminated glass. The interlayer film 1 is provided with a first layer 2, a second layer 3 arranged on a first surface 2a side of the first layer 2, and a third layer 4 arranged on a second surface 2b side opposite to the first surface 2a of the first layer 2. The second layer 3 is layered on the first surface 2a of the first layer 2. The third layer 4 is layered on the second surface 2b of the first layer 2. The first layer 2 is an intermediate layer. For example, the second layer 3 and the third layer 4 are protective layers and are surface layers in the present embodiment. The first layer 2 is arranged between the second layer 3 and the third layer 4 to be sandwiched. Accordingly, the interlayer film 1 has a multilayer structure in which the second layer 3, the first layer 2 and the third layer 4 are layered in this order.

It is preferred that a surface 3a at a side opposite to the first layer 2 side of the second layer 3 be a surface on which a laminated glass member is layered. It is preferred that a surface 4a at a side opposite to the first layer 2 side of the third layer 4 be a surface on which a laminated glass member is layered.

Other layers may be arranged between the first layer 2 and the second layer 3 and between the first layer 2 and the third layer 4, respectively. It is preferred that each of the second layer 3 and the third layer 4 be directly layered on the first layer 2. Examples of the other layers include a layer including a thermoplastic resin such as a polyvinyl acetal resin and a layer including polyethylene terephthalate and the like.

With regard to the interlayer film 1, the interlayer film 1 as a whole includes a polyvinyl acetal resin, a plasticizer, a hindered amine light stabilizer and an oxidation inhibitor containing phosphorus. That is, at least one layer among the first layer 2, the second layer 3 and the third layer 4 includes a polyvinyl acetal resin, includes a plasticizer, includes a hindered amine light stabilizer, and includes an oxidation inhibitor containing phosphorus.

Fig. 2 shows an interlayer film for laminated glass which is not in accordance with an embodiment of the present invention schematically represented as a partially cut-away cross-sectional view.

A interlayer film 31 shown in Fig. 2 is a single-layered interlayer film having a one-layer structure. The interlayer film 31 is a first layer. The interlayer film 31 is used for obtaining laminated glass. The interlayer film 31 is an interlayer film for laminated glass. The interlayer film 31 includes a polyvinyl acetal resin, a plasticizer, a hindered amine light stabilizer and an oxidation inhibitor containing phosphorus.

Since the interlayer films 1, 31 each are provided with the above-described configuration, a gap is difficult to be generated at the end part of a sheet of laminated glass prepared with each of the interlayer films 1, 31 and an increase in the YI value measured at the end part of the sheet of laminated glass can be suppressed. In the interlayer film 1, even when laminated glass prepared with the interlayer film 1 is irradiated with light for a long period of time and the laminated glass is allowed to stand at a high temperature for a long period of time, a gap is difficult to be generated at the end part of the sheet of laminated glass. Furthermore, even when laminated glass prepared with each of the interlayer films 1, 31 is allowed to stand at a high temperature for a long period of time, an increase in the YI value can be suppressed. The gap is a recess portion of the interlayer film formed by the omission thereof toward the inside thereof at the end part of the sheet of laminated glass. For example, the interlayer film is inwardly retracted, and the recess portion is formed.

The interlayer film is provided with the first layer, the second layer and the third layer.

In the interlayer film 1, each of the second layer 3 and the third layer 4 is layered on each of both faces of the first layer 2. The second layer needs only to be arranged on the first surface side of the first layer. The second layer is arranged on the first surface side of the first layer, and the third layer does not need to be arranged on the second surface side of the first layer. However, it is preferred that the second layer be arranged on the first surface side of the first layer, and the third layer be arranged on the second surface side of the first layer. By arranging the third layer on the second surface side of the first layer, the handling properties of the interlayer film and the penetration resistance of laminated glass are further enhanced. Moreover, a gap is further difficult to be generated at the end part of the sheet of laminated glass, and an increase in the YI value measured at the end part of the sheet of laminated glass can be further suppressed. Furthermore, at the surfaces of both sides of the interlayer film, the adhesiveness to a laminated glass member and the like can be adjusted. In the case where the third layer is absent, the adhesiveness of an outer surface of the second layer of the interlayer film to a laminated glass member can be adjusted.

The interlayer film is provided with a first layer including a polyvinyl acetal resin and a plasticizer and a second layer being arranged on a first surface side of the first layer and including a polyvinyl acetal resin and a plasticizer and is provided with a third layer being arranged on a second surface side opposite to the first surface side of the first layer and including a polyvinyl acetal resin and a plasticizer, at least one layer among the first layer, the second layer and the third layer include a hindered amine light stabilizer, and at least the first layer includes an oxidation inhibitor containing phosphorus.

The configuration 2 includes the following configuration 2-1 and the following configuration 2-2, and it is preferred that the configuration 2 be the following configuration 2-1 or the following configuration 2-2. The configuration 2-1 is not part of the invention.

(Configuration 2-1) The interlayer film is provided with a first layer including a polyvinyl acetal resin and a plasticizer and a second layer being arranged on a first surface side of the first layer and including a polyvinyl acetal resin and a plasticizer, and is not provided with a third layer being arranged on a second surface side opposite to the first surface side of the first layer and including a polyvinyl acetal resin and a plasticizer, at least one layer among the first layer and the second layer includes a hindered amine light stabilizer, and at least one layer among the first layer and the second layer includes an oxidation inhibitor containing phosphorus.

(Configuration 2-2) The interlayer film is provided with a first layer including a polyvinyl acetal resin and a plasticizer, a second layer being arranged on a first surface side of the first layer and including a polyvinyl acetal resin and a plasticizer, and a third layer being arranged on a second surface side opposite to the first surface side of the first layer and including a polyvinyl acetal resin and a plasticizer, at least one layer among the first layer, the second layer and the third layer includes a hindered amine light stabilizer, and at least one layer among the first layer, the second layer and the third layer includes an oxidation inhibitor containing phosphorus.

The interlayer film may satisfy the requirement for the configuration 1 and may satisfy the requirement for the configuration 2. It is preferred that the interlayer film satisfy the requirement for the configuration 2. The interlayer film may satisfy the requirement for the configuration 2-1 and may satisfy the requirement for the configuration 2-2. It is preferred that the interlayer film satisfy the requirement for the configuration 2-2.

From the viewpoint of further enhancing the penetration resistance of laminated glass prepared with the interlayer film, the first layer includes a polyvinyl acetal resin and a plasticizer. From the viewpoint of further enhancing the penetration resistance of laminated glass prepared with the interlayer film, the second layer includes a polyvinyl acetal resin and the second layer includes a plasticizer. From the viewpoint of further enhancing the penetration resistance of laminated glass prepared with the interlayer film, the third layer includes a polyvinyl acetal resin and it is preferred that the third layer include a plasticizer. Moreover, by allowing the third layer to include a polyvinyl acetal resin and a plasticizer, a gap is further difficult to be generated at the end part of the sheet of laminated glass, and an increase in the YI value measured at the end part of the sheet of laminated glass can be further suppressed.

Each of the first layer, the second layer and the third layer include a polyvinyl acetal resin and a plasticizer.

Hereinafter, the details of the first layer (including a single-layered interlayer film), the second layer and the third layer which constitute the interlayer film for laminated glass according to the present invention, and the details of each ingredient included in the first layer, the second layer and the third layer will be described.

### (Polyvinyl acetal resin)

The first layer (including a single-layered interlayer film) includes a polyvinyl acetal resin (hereinafter, may be described as a polyvinyl acetal resin (1)). The second layer includes a polyvinyl acetal resin (hereinafter, may be described as a polyvinyl acetal resin (2)). The third layer includes a polyvinyl acetal resin (hereinafter, may be described as a polyvinyl acetal resin (3)). The polyvinyl acetal resin (1), the polyvinyl acetal resin (2) and the polyvinyl acetal resin (3) may be the same as or different from one another. One kind of each of the polyvinyl acetal resin (1), the polyvinyl acetal resin (2) and the polyvinyl acetal resin (3) may be used alone, and two or more kinds thereof may be combinedly used.

For example, the polyvinyl acetal resin can be produced by acetalizing polyvinyl alcohol with an aldehyde. For example, the polyvinyl alcohol is obtained by saponifying polyvinyl acetate. The saponification degree of the polyvinyl alcohol generally falls within the range of 70 to 99.9% by mol.

The average polymerization degree of the polyvinyl alcohol is preferably greater than or equal to 200, more preferably greater than or equal to 500, still more preferably greater than or equal to 1500, further preferably greater than or equal to 1600, especially preferably greater than or equal to 2600, most preferably greater than or equal to 2700, preferably less than or equal to 5000, more preferably less than or equal to 4000, and further preferably less than or equal to 3500. When the average polymerization degree is greater than or equal to the above lower limit, the penetration resistance of laminated glass is further enhanced. When the average polymerization degree is less than or equal to the above upper limit, formation of an interlayer film is facilitated. In particular, when the average polymerization degree of the polyvinyl alcohol is greater than or equal to 1500, it is possible to prevent the appearance of laminated glass from being deteriorated by poor degassing.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin be within the range of 3 to 5, and it is preferred that the number of carbon atoms of the acetal group be 3 or 4. When the number of carbon atoms of the acetal group in the polyvinyl acetal resin is greater than or equal to 3, the glass transition temperature of the interlayer film is sufficiently lowered.

The aldehyde is not particularly limited. In general, as the aldehyde, an aldehyde with 1 to 10 carbon atoms is suitably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. Of these, propionaldehyde, n-butyraldehyde, isobutyraldehyde, n-hexylaldehyde or n-valeraldehyde is preferred, propionaldehyde, n-butyraldehyde or isobutyraldehyde is more preferred, and n-butyraldehyde is further preferred. One kind of the aldehyde may be used alone and two or more kinds thereof may be combinedly used.

The hydroxyl content (the amount of hydroxyl groups) of the polyvinyl acetal resin (1) is preferably greater than or equal to 17% by mol, more preferably greater than or equal to 20% by mol, further preferably greater than or equal to 22% by mol, preferably less than or equal to 30% by mol, more preferably less than 27% by mol, further preferably less than or equal to 26% by mol, and especially preferably less than or equal to 25% by mol. When the hydroxyl content is greater than or equal to the above lower limit, the adhesive force of the interlayer film is further enhanced. In particular, when the hydroxyl content of the polyvinyl acetal resin (1) is greater than or equal to 20% by mol, the resin is high in reaction efficiency and is excellent in productivity, and moreover, when less than 27% by mol, the sound insulating properties of laminated glass are further enhanced. Moreover, when the hydroxyl content is less than or equal to the above upper limit, the flexibility of the interlayer film is enhanced and the handling of the interlayer film is facilitated.

The hydroxyl content of each of the polyvinyl acetal resin (2) and the polyvinyl acetal resin (3) is preferably greater than or equal to 25% by mol, more preferably greater than or equal to 28% by mol, preferably less than or equal to 35% by mol, and more preferably less than or equal to 32% by mol. When the hydroxyl content is greater than or equal to the above lower limit, the adhesive force of the interlayer film is further enhanced. Moreover, when the hydroxyl content is less than or equal to the above upper limit, the flexibility of the interlayer film is enhanced and the handling of the interlayer film is facilitated.

The hydroxyl content of the polyvinyl acetal resin is a value expressing the molar fraction determined by dividing the amount of ethylene groups to which the hydroxyl group is bonded by the total amount of ethylene groups in the main chain in terms of percentage. For example, the amount of ethylene groups to which the hydroxyl group is bonded can be measured in accordance with JIS K6726 "Testing methods for polyvinyl alcohol" to be determined.

The acetylation degree (the amount of acetyl groups) of the polyvinyl acetal resin (1) is preferably greater than or equal to 0.01% by mol, more preferably greater than or equal to 0.1% by mol, still more preferably greater than or equal to 7% by mol, further preferably greater than or equal to 9% by mol, preferably less than or equal to 30% by mol, more preferably less than or equal to 25% by mol, and further preferably less than or equal to 15% by mol. When the acetylation degree is greater than or equal to the above lower limit, the compatibility between the polyvinyl acetal resin and a plasticizer is enhanced. When the acetylation degree is less than or equal to the above upper limit, the moisture resistance of the interlayer film and laminated glass is enhanced. In particular, when the acetylation degree of the polyvinyl acetal resin (1) is greater than or equal to 0.1% by mol and less than or equal to 25% by mol, the laminated glass is excellent in penetration resistance.

The acetylation degree of each of the polyvinyl acetal resin (2) and the polyvinyl acetal resin (3) is preferably greater than or equal to 0.01% by mol, more preferably greater than or equal to 0.5% by mol, preferably less than or equal to 10% by mol, and more preferably less than or equal to 2% by mol. When the acetylation degree is greater than or equal to the above lower limit, the compatibility between the polyvinyl acetal resin and a plasticizer is enhanced. When the acetylation degree is less than or equal to the above upper limit, the moisture resistance of the interlayer film and laminated glass is enhanced.

The acetylation degree is a value expressing the molar fraction determined by dividing a value obtained by subtracting the amount of ethylene groups to which the acetal group is bonded and the amount of ethylene groups to which the hydroxyl group is bonded from the total amount of ethylene groups in the main chain by the total amount of ethylene groups in the main chain in terms of percentage. For example, the amount of ethylene groups to which the acetal group is bonded can be measured in accordance with JIS K6728 "Testing methods for polyvinyl butyral".

The acetalization degree of the polyvinyl acetal resin (1) (the butyralization degree in the case of a polyvinyl butyral resin) is preferably greater than or equal to 47% by mol, more preferably greater than or equal to 60% by mol, preferably less than or equal to 80% by mol, and more preferably less than or equal to 70% by mol. When the acetalization degree is greater than or equal to the above lower limit, the compatibility between the polyvinyl acetal resin and a plasticizer is enhanced. When the acetalization degree is less than or equal to the above upper limit, the reaction time required for producing the polyvinyl acetal resin is shortened.

The acetalization degree of each of the polyvinyl acetal resin (2) and the polyvinyl acetal resin (3) (the butyralization degree in the case of a polyvinyl butyral resin) is preferably greater than or equal to 55% by mol, more preferably greater than or equal to 67% by mol, preferably less than or equal to 75% by mol, and more preferably less than or equal to 71% by mol. When the acetalization degree is greater than or equal to the above lower limit, the compatibility between the polyvinyl acetal resin and a plasticizer is enhanced. When the acetalization degree is less than or equal to the above upper limit, the reaction time required for producing the polyvinyl acetal resin is shortened.

The acetalization degree is a value expressing the molar fraction determined by dividing the amount of ethylene groups to which the acetal group is bonded by the total amount of ethylene groups in the main chain in terms of percentage. The acetalization degree can be calculated by a method in accordance with JIS K6728 "Testing methods for polyvinyl butyral".

It is preferred that the hydroxyl content (the amount of hydroxyl groups), the acetalization degree (the butyralization degree) and the acetylation degree be calculated from the results measured by a method in accordance with JIS K6728 "Testing methods for polyvinyl butyral". However, the measurement by ASTM D1396-92 or JIS K6728 may be employed. In the case where the polyvinyl acetal resin is a polyvinyl butyral resin, the hydroxyl content (the amount of hydroxyl groups), the acetalization degree (the butyralization degree) and the acetylation degree can be calculated from the results measured by a method in accordance with JIS K6728 "Testing methods for polyvinyl butyral".

From the viewpoint of further improving the penetration resistance of laminated glass, it is preferred that the polyvinyl acetal resin (1) be a polyvinyl acetal resin (A) with an acetylation degree (a) less than or equal to 8% by mol and an acetalization degree (a) greater than or equal to 66% by mol or a polyvinyl acetal resin (B) with an acetylation degree (b) greater than 8% by mol. The polyvinyl acetal resin (1) may be the polyvinyl acetal resin (A) and may be the polyvinyl acetal resin (B).

The acetylation degree (a) of the polyvinyl acetal resin (A) is less than or equal to 8% by mol, preferably less than or equal to 7.5% by mol, more preferably less than or equal to 7% by mol, further preferably less than or equal to 6.5% by mol, especially preferably less than or equal to 6% by mol, preferably greater than or equal to 0.1% by mol, more preferably greater than or equal to 0.5% by mol, further preferably greater than or equal to 0.8% by mol, especially preferably greater than or equal to 1% by mol, and most preferably greater than 5% by mol. When the acetylation degree (a) is less than or equal to the above upper limit and greater than or equal to the above lower limit, the transfer of a plasticizer can be easily controlled and the sound insulating properties of laminated glass are further enhanced.

The acetalization degree (a) of the polyvinyl acetal resin (A) is greater than or equal to 66% by mol, preferably greater than or equal to 70% by mol, more preferably greater than or equal to 70.5% by mol, further preferably greater than or equal to 71% by mol, especially preferably greater than or equal to 71.5% by mol, most preferably greater than or equal to 72% by mol, preferably less than or equal to 85% by mol, more preferably less than or equal to 83% by mol, further preferably less than or equal to 81% by mol, and especially preferably less than or equal to 79% by mol. When the acetalization degree (a) is greater than or equal to the above lower limit, the sound insulating properties of laminated glass are further enhanced. When the acetalization degree (a) is less than or equal to the above upper limit, the reaction time required for producing the polyvinyl acetal resin (A) can be shortened.

The hydroxyl content (a) of the polyvinyl acetal resin (A) is preferably greater than or equal to 16% by mol, more preferably greater than or equal to 18% by mol, further preferably greater than or equal to 19% by mol, especially preferably greater than or equal to 20% by mol, most preferably greater than or equal to 21% by mol, preferably less than or equal to 31% by mol, more preferably less than or equal to 30% by mol, further preferably less than or equal to 29% by mol, especially preferably less than or equal to 28% by mol, and most preferably less than or equal to 26% by mol. When the hydroxyl content (a) is greater than or equal to the above lower limit, the adhesive force of the first layer is further enhanced. When the hydroxyl content (a) is less than or equal to the above upper limit, the sound insulating properties of laminated glass are further enhanced.

The acetylation degree (b) of the polyvinyl acetal resin (B) is greater than 8% by mol, preferably greater than or equal to 9% by mol, more preferably greater than or equal to 9.5% by mol, further preferably greater than or equal to 10% by mol, especially preferably greater than or equal to 10.5% by mol, preferably less than or equal to 30% by mol, more preferably less than or equal to 28% by mol, further preferably less than or equal to 26% by mol, and especially preferably less than or equal to 24% by mol. When the acetylation degree (b) is greater than or equal to the above lower limit, the sound insulating properties of laminated glass are further enhanced. When the acetylation degree (b) is less than or equal to the above upper limit, the reaction time required for producing the polyvinyl acetal resin (B) can be shortened.

The acetalization degree (b) of the polyvinyl acetal resin (B) is preferably greater than or equal to 50% by mol, more preferably greater than or equal to 53% by mol, further preferably greater than or equal to 55% by mol, especially preferably greater than or equal to 60% by mol, preferably less than or equal to 80% by mol, more preferably less than or equal to 78% by mol, further preferably less than or equal to 76% by mol, and especially preferably less than or equal to 74% by mol. When the acetalization degree (b) is greater than or equal to the above lower limit, the sound insulating properties of laminated glass are further enhanced. When the acetalization degree (b) is less than or equal to the above upper limit, the reaction time required for producing the polyvinyl acetal resin (B) can be shortened.

The hydroxyl content (b) of the polyvinyl acetal resin (B) is preferably greater than or equal to 16% by mol, more preferably greater than or equal to 18% by mol, further preferably greater than or equal to 19% by mol, especially preferably greater than or equal to 20% by mol, most preferably greater than or equal to 21% by mol, preferably less than or equal to 31% by mol, more preferably less than or equal to 30% by mol, further preferably less than or equal to 29% by mol, especially preferably less than or equal to 28% by mol, and most preferably less than or equal to 26% by mol. When the hydroxyl content (b) is greater than or equal to the above lower limit, the adhesive force of the first layer is further enhanced. When the hydroxyl content (b) is less than or equal to the above upper limit, the sound insulating properties of laminated glass are further enhanced.

It is preferred that each of the polyvinyl acetal resin (A) and the polyvinyl acetal resin (B) be a polyvinyl butyral resin.

### (Plasticizer)

It is preferred that the first layer (including a single-layered interlayer film) include a plasticizer (hereinafter, may be described as a plasticizer (1)). It is preferred that the second layer include a plasticizer (hereinafter, may be described as a plasticizer (2)). It is preferred that the third layer include a plasticizer (hereinafter, may be described as a plasticizer (3)). By using a polyvinyl acetal resin and a plasticizer together, the adhesive force of a layer including the polyvinyl acetal resin and the plasticizer to a laminated glass member or another layer is moderately enhanced. The plasticizer is not particularly limited. The plasticizer (1), the plasticizer (2) and the plasticizer (3) may be the same as or different from one another. One kind of the plasticizer may be used alone and two or more kinds thereof may be combinedly used.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Of these, organic ester plasticizers are preferred. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol and the like. Examples of the monobasic organic acid include butyric acid, isobutyric acid, caproic acid, 2-ethylbutyric acid, hepthylic acid, n-octylic acid, 2-ethylhexanoic acid, n-nonylic acid, decylic acid, and the like.

Examples of the polybasic organic acid ester include ester compounds of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyd, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

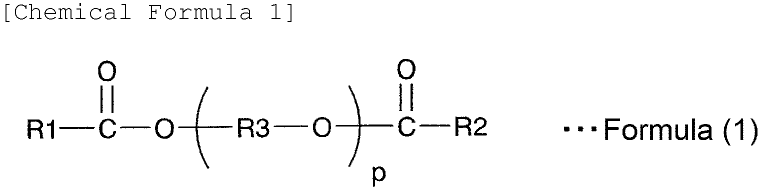

In the foregoing formula (1), R1 and R2 each represent an organic group with 2 to 10 carbon atoms, R3 represents an ethylene group, an isopropylene group or a n-propylene group, and p represents an integer of 3 to 10. It is preferred that R1 and R2 in the foregoing formula (1) each be an organic group with 5 to 10 carbon atoms, and it is more preferred that R1 and R2 each be an organic group with 6 to 10 carbon atoms.

It is preferred that the plasticizer be triethylene glycol di-2-ethylhexanoate (3GO), triethylene glycol di-2-ethylbutyrate (3GH) or triethylene glycol di-2-ethylpropanoate, it is more preferred that the plasticizer be triethylene glycol di-2-ethylhexanoate or triethylene glycol di-2-ethylbutyrate, and it is further preferred that the plasticizer be triethylene glycol di-2-ethylhexanoate.

The content of the plasticizer (1) relative to 100 parts by weight of the polyvinyl acetal resin (1) (hereinafter, may be described as the content (1)) is preferably greater than or equal to 40 parts by weight, more preferably greater than or equal to 55 parts by weight, further preferably greater than or equal to 60 parts by weight, preferably less than or equal to 100 parts by weight, more preferably less than or equal to 90 parts by weight, and further preferably less than or equal to 85 parts by weight. When the content (1) is greater than or equal to the above lower limit, the flexibility of the interlayer film is enhanced and the handling of the interlayer film is facilitated. When the content (1) is less than or equal to the above upper limit, the transparency of the interlayer film is further enhanced.

Each of the content of the plasticizer (2) relative to 100 parts by weight of the polyvinyl acetal resin (2) (hereinafter, may be described as the content (2)) and the content of the plasticizer (3) relative to 100 parts by weight of the polyvinyl acetal resin (3) (hereinafter, may be described as the content (3)) is preferably greater than or equal to 30 parts by weight, more preferably greater than or equal to 35 parts by weight, preferably less than or equal to 44 parts by weight, and more preferably less than or equal to 42 parts by weight. When each of the content (2) and the content (3) is greater than or equal to the above lower limit, the flexibility of the interlayer film is enhanced and the handling of the interlayer film is facilitated. When each of the content (2) and the content (3) is less than or equal to the above upper limit, the penetration resistance of laminated glass is further enhanced.

From the viewpoint that a gap is further difficult to be generated at the end part of the sheet of laminated glass, it is preferred that the content (1) be greater than the content (2) and it is preferred that the content (1) be greater than the content (3). In particular, in the case where the content (1) is greater than each of the content (2) and the content (3), by allowing the first layer to include the hindered amine light stabilizer and the oxidation inhibitor containing phosphorus, a gap is still further difficult to be generated at the end part of the sheet of laminated glass.

From the viewpoint of further enhancing the penetration resistance of laminated glass, each of the absolute value of the difference between the content (1) and the content (2) and the absolute value of the difference between the content (1) and the content (3) is preferably greater than or equal to 5 parts by weight, more preferably greater than or equal to 10 parts by weight, further preferably greater than or equal to 12 parts by weight, and especially preferably greater than or equal to 20 parts by weight. Each of the absolute value of the difference between the content (1) and the content (2) and the absolute value of the difference between the content (1) and the content (3) is preferably less than or equal to 50 parts by weight.

### (Hindered amine light stabilizer)

For the purpose that a gap is difficult to be generated at the end part of the sheet of laminated glass and an increase in the YI value measured at the end part of the sheet of laminated glass is suppressed, with regard to the interlayer film, a hindered amine light stabilizer is included in the interlayer film as a whole. Inclusion of respective ingredients in the interlayer film as a whole refers to inclusion of respective ingredients in any region of the interlayer film. The first layer includes a hindered amine light stabilizer. It is preferred that the second layer include a hindered amine light stabilizer. It is preferred that the third layer include a hindered amine light stabilizer. It is preferred that, among the first layer, the second layer and the third layer, the first layer include a hindered amine light stabilizer. One kind of the hindered amine light stabilizer may be used alone and two or more kinds thereof may be combinedly used.

Examples of the hindered amine light stabilizer include a hindered amine light stabilizer in which an alkyl group, an alkoxy group or a hydrogen atom is bonded to the nitrogen atom of a piperidine structure, and the like. From the viewpoint that a gap is further difficult to be generated at the end part of the sheet of laminated glass and an increase in the YI value measured at the end part of the sheet of laminated glass is further suppressed, a hindered amine light stabilizer in which an alkyl group or an alkoxy group is bonded to the nitrogen atom of a piperidine structure is preferred. It is preferred that the hindered amine light stabilizer be a hindered amine light stabilizer in which an alkyl group is bonded to the nitrogen atom of a piperidine structure, and it is also preferred that the hindered amine light stabilizer be a hindered amine light stabilizer in which an alkoxy group is bonded to the nitrogen atom of a piperidine structure.

Examples of the hindered amine light stabilizer in which an alkyl group is bonded to the nitrogen atom of a piperidine structure include TINUVIN 765, TINUVIN 622SF, ADK STAB LA-52, and the like.

Examples of the hindered amine light stabilizer in which an alkoxy group is bonded to the nitrogen atom of a piperidine structure include TINUVIN XT-850FF, TINUVIN XT-855FF, ADK STAB LA-81, and the like.

Examples of the hindered amine light stabilizer in which a hydrogen atom is bonded to the nitrogen atom of a piperidine structure include TINUVIN 770DF, Hostavin N24, and the like.

From the viewpoint that a gap is further difficult to be generated at the end part of the sheet of laminated glass and an increase in the YI value measured at the end part of the sheet of laminated glass is further suppressed, the molecular weight of the hindered amine light stabilizer is preferably less than or equal to 2000, more preferably less than or equal to 1000, and further preferably less than or equal to 700.

In 100% by weight of a layer including the hindered amine light stabilizer, the content of the hindered amine light stabilizer is preferably greater than or equal to 0.01% by weight, more preferably 0.02% by weight, further preferably greater than or equal to 0.05% by weight, preferably less than or equal to 0.5% by weight, and more preferably less than or equal to 0.3% by weight. Moreover, in 100% by weight of the first layer, in 100% by weight of the second layer and in 100% by weight of the third layer, the content of the hindered amine light stabilizer is preferably greater than or equal to 0.01% by weight, more preferably greater than or equal to 0.02% by weight, further preferably greater than or equal to 0.05% by weight, preferably less than or equal to 0.5% by weight, and more preferably less than or equal to 0.3% by weight. When the content of the hindered amine light stabilizer is greater than or equal to the above lower limit and less than or equal to the above upper limit, a gap is further difficult to be generated at the end part of the sheet of laminated glass, and an increase in the YI value measured at the end part of the sheet of laminated glass can be further suppressed.

The content of the hindered amine light stabilizer is preferably greater than or equal to 0.01 parts by weight, more preferably greater than or equal to 0.02 parts by weight, further preferably greater than or equal to 0.05 parts by weight, preferably less than or equal to 0.5 parts by weight, and more preferably less than or equal to 0.3 parts by weight, relative to 100 parts by weight of the polyvinyl acetal resin included in the layer including the hindered amine light stabilizer. When the content of the hindered amine light stabilizer is greater than or equal to the above lower limit and less than or equal to the above upper limit, a gap is further difficult to be generated at the end part of the sheet of laminated glass, and an increase in the YI value measured at the end part of the sheet of laminated glass can be further suppressed.

### (Oxidation inhibitor)

The first layer includes an oxidation inhibitor containing phosphorus, and it is preferred that the first layer include an oxidation inhibitor including a phenol skeleton. It is preferred that the second layer include an oxidation inhibitor, it is preferred that the second layer include an oxidation inhibitor containing phosphorus, and it is preferred that the second layer include an oxidation inhibitor including a phenol skeleton. It is preferred that the third layer include an oxidation inhibitor, it is preferred that the third layer include an oxidation inhibitor containing phosphorus, and it is preferred that the third layer include an oxidation inhibitor including a phenol skeleton. For the purpose that a gap is difficult to be generated at the end part of the sheet of laminated glass and an increase in the YI value measured at the end part of the sheet of laminated glass is suppressed, with regard to the interlayer film, an oxidation inhibitor containing phosphorus is included in the interlayer film as a whole. From the viewpoint that a gap is further difficult to be generated at the end part of the sheet of laminated glass and an increase in the YI value measured at the end part of the sheet of laminated glass is further suppressed, with regard to the interlayer film, it is preferred that an oxidation inhibitor including a phenol skeleton be included in the interlayer film as a whole. One kind of the oxidation inhibitor may be used alone and two or more kinds thereof may be combinedly used.

From the viewpoint that a gap is further difficult to be generated at the end part of the sheet of laminated glass and an increase in the YI value measured at the end part of the sheet of laminated glass is further suppressed, it is preferred that the first layer include an oxidation inhibitor containing phosphorus, and furthermore, it is preferred that the first layer include an oxidation inhibitor including a phenol skeleton.

Examples of the oxidation inhibitor include an oxidation inhibitor including a phenol skeleton, an oxidation inhibitor containing sulfur, an oxidation inhibitor containing phosphorus, and the like.

From the viewpoint of further suppressing an increase in the YI value measured at the end part of the sheet of laminated glass, it is preferred that the oxidation inhibitor be an oxidation inhibitor including a phenol skeleton or an oxidation inhibitor containing phosphorus, and it is more preferred that the oxidation inhibitor be an oxidation inhibitor including a phenol skeleton.

Examples of the oxidation inhibitor including a phenol skeleton include 2,6-di-t-butyl-p-cresol (BHT), butylated hydroxyanisole (BHA), 2,6-di-t-butyl-4-ethylphenol, stearyl-β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like.

Examples of the oxidation inhibitor containing phosphorus include tridecyl phosphite, tris(tridecyl) phosphite, triphenyl phosphite, trinonylphenyl phosphite, bis(tridecyl)pentaerythritol diphosphite, bis(decyl)pentaerythritol diphosphite, tris(2,4-di-t-butylphenyl)phosphite, bis(2,4-di-t-butyl-6-methylphenyl)ethyl ester phosphorous acid, tris(2,4-di-t-butylphenyl)phosphite, 2,2'-methylenebis(4,6-di-t-butyl-1-phenyloxy)(2-ethylhexyloxy)phosphorus, and the like.

From the viewpoint of further suppressing an increase in the YI value measured at the end part of the sheet of laminated glass, the molecular weight of the oxidation inhibitor is greater than or equal to 200, preferably greater than or equal to 300, more preferably greater than or equal to 500, and less than or equal to 1500.

In 100% by weight of a layer including the oxidation inhibitor, the content of the oxidation inhibitor is preferably greater than or equal to 0.1% by weight, more preferably greater than or equal to 0.2% by weight, preferably less than or equal to 2% by weight, and more preferably less than or equal to 1.8% by weight. Moreover, in 100% by weight of the first layer, in 100% by weight of the second layer and in 100% by weight of the third layer, the content of the oxidation inhibitor is preferably greater than or equal to 0.1% by weight, preferably less than or equal to 2% by weight, and more preferably less than or equal to 1.8% by weight. When the content of the oxidation inhibitor is greater than or equal to the above lower limit and less than or equal to the above upper limit, a gap is further difficult to be generated at the end part of the sheet of laminated glass, and an increase in the YI value measured at the end part of the sheet of laminated glass can be further suppressed.

The content of the oxidation inhibitor is preferably greater than or equal to 0.1 parts by weight, more preferably greater than or equal to 0.2 parts by weight, preferably less than or equal to 2 parts by weight, and more preferably less than or equal to 1.8 parts by weight, relative to 100 parts by weight of the polyvinyl acetal resin included in the layer including the oxidation inhibitor. When the content of the oxidation inhibitor is greater than or equal to the above lower limit and less than or equal to the above upper limit, a gap is further difficult to be generated at the end part of the sheet of laminated glass, and an increase in the YI value measured at the end part of the sheet of laminated glass can be further suppressed.

### (Metal/Metal salt)

It is preferred that the interlayer film include at least one kind of a first metal atom selected from the group consisting of an alkali metal, zinc and aluminum. The interlayer film does not include or includes an alkaline earth metal. It is preferred that the first metal atom and the alkaline earth metal each be included in the second layer. It is preferred that the first metal atom and the alkaline earth metal each be included in the third layer. By the use of the first metal atom and the alkaline earth metal, controlling the adhesiveness between a laminated glass member and the interlayer film or the adhesiveness between respective layers in the interlayer film is facilitated. The first metal atom and the alkaline earth metal each may be in the state of being a metal salt (hereinafter, may be described as Metal salt (M)) to be blended.

It is preferred that the Metal salt (M) contain at least one kind of metal selected from the group consisting of Li, Na, K, Rb, Cs, Mg, Ca, Sr and Ba. Since controlling the adhesiveness between a laminated glass member and the interlayer film or the adhesiveness between respective layers in the interlayer film is facilitated, it is preferred that the interlayer film include at least one kind of metal among K and Mg.

Moreover, it is more preferred that the Metal salt (M) be an alkali metal salt of an organic acid with 2 to 16 carbon atoms or an alkaline earth metal salt of an organic acid with 2 to 16 carbon atoms, and it is further preferred that the Metal salt (M) be a magnesium carboxylate with 2 to 16 carbon atoms or a potassium carboxylate with 2 to 16 carbon atoms.

Although the magnesium carboxylate with 2 to 16 carbon atoms and the potassium carboxylate with 2 to 16 carbon atoms are not particularly limited, examples thereof include magnesium acetate, potassium acetate, magnesium propionate, potassium propionate, magnesium 2-ethylbutanoate, potassium 2-ethylbutanoate, magnesium 2-ethylhexanoate, potassium 2-ethylhexanoate, and the like.

In the case where the interlayer film includes the first metal atom, each of the content of the first metal atom in the interlayer film, the content of an alkali metal in the first layer, the content of the first metal atom in the second layer and the content of the second metal atom in the third layer is preferably greater than or equal to 5 ppm, more preferably greater than or equal to 10 ppm, further preferably greater than or equal to 20 ppm, especially preferably greater than or equal to 50 ppm, preferably less than or equal to 300 ppm, more preferably less than or equal to 250 ppm, further preferably less than or equal to 200 ppm, and especially preferably less than or equal to 150 ppm, in terms of the content of the metal. When the content of the first metal atom is greater than or equal to the above lower limit and less than or equal to the above upper limit, the adhesiveness between a laminated glass member and the interlayer film or the adhesiveness between respective layers in the interlayer film can be further well controlled, and an increase in the YI value measured at the end part of the sheet of laminated glass is further suppressed.

In the case where the interlayer film includes an alkali metal, each of the content of an alkali metal in the interlayer film, the content of an alkali metal in the first layer, the content of an alkali metal in the second layer and the content of an alkali metal in the third layer is preferably greater than or equal to 5 ppm, more preferably greater than or equal to 10 ppm, further preferably greater than or equal to 20 ppm, especially preferably greater than or equal to 50 ppm, preferably less than or equal to 300 ppm, more preferably less than or equal to 250 ppm, further preferably less than or equal to 200 ppm, and especially preferably less than or equal to 150 ppm, in terms of the content of the metal. When the content of the alkali metal is greater than or equal to the above lower limit and less than or equal to the above upper limit, the adhesiveness between a laminated glass member and the interlayer film or the adhesiveness between respective layers in the interlayer film can be further well controlled, and an increase in the YI value measured at the end part of the sheet of laminated glass is further suppressed. The content of the metal can be measured by means of an ICP emission spectrometer ("ICPE-9000" available from SHIMADZU CORPORATION).

### (Other ingredients)

Each of the first layer, the second layer and the third layer may include additives such as an ultraviolet ray shielding agent, a flame retardant, an antistatic agent, a pigment, a dye, an adhesive force regulating agent, a moisture-resistance improving agent, a fluorescent brightening agent, and an infrared ray absorber, as necessary. One kind of these additives may be used alone and two or more kinds thereof may be combinedly used.

### (Other details of interlayer film for laminated glass)

From the viewpoint of further improving the sound insulating performance of laminated glass, the glass transition temperature of the first layer is preferably lower than or equal to 30°C, more preferably lower than or equal to 20°C, further preferably lower than or equal to 10°C, and especially preferably lower than or equal to 5°C. The glass transition temperature of the first layer is preferably higher than or equal to -15°C. In the case where the glass transition temperature of the first layer is low, a gap tends to be generated at the end part of the sheet of laminated glass. As such, in the case where the glass transition temperature of the first layer is low, by allowing the first layer to include the hindered amine light stabilizer and the oxidation inhibitor containing phosphorus, a gap is still further difficult to be generated at the end part of the sheet of laminated glass.

The thickness of the interlayer film for laminated glass according to the present invention is not particularly limited. From the viewpoint of the practical aspect and the viewpoint of sufficiently enhancing the heat shielding properties, the thickness of the interlayer film is preferably greater than or equal to 0.1 mm, more preferably greater than or equal to 0.25 mm, preferably less than or equal to 3 mm, and more preferably less than or equal to 1.5 mm. When the thickness of the interlayer film is greater than or equal to the above lower limit, the penetration resistance of laminated glass is enhanced. When the thickness of the interlayer film is less than or equal to the above upper limit, the transparency of the interlayer film is further improved.

The thickness of the interlayer film is defined as T. In the case of a multi-layered interlayer film, from the viewpoint that a gap is further difficult to be generated at the end part of the sheet of laminated glass and an increase in the YI value measured at the end part of the sheet of laminated glass is further suppressed, the thickness of the first layer is preferably greater than or equal to 0.0625T, more preferably greater than or equal to 0.1T, preferably less than or equal to 0.375T, and more preferably less than or equal to 0.25T.

From the viewpoint that a gap is further difficult to be generated at the end part of the sheet of laminated glass and an increase in the YI value measured at the end part of the sheet of laminated glass is further suppressed, the thickness of each of the second layer and the third layer is preferably greater than or equal to 0.625T, more preferably greater than or equal to 0.75T, preferably less than or equal to 0.9375T, and more preferably less than or equal to 0.9T. Moreover, when the thickness of each of the second layer and the third layer is greater than or equal to the above lower limit and less than or equal to the above upper limit, it is possible to suppress the bleed-out of the plasticizer.

From the viewpoint that a gap is further difficult to be generated at the end part of the sheet of laminated glass and an increase in the YI value measured at the end part of the sheet of laminated glass is further suppressed, in the case where the interlayer film is provided with the second layer and the third layer, the total thickness of the second layer and the third layer is preferably greater than or equal to 0.625T, more preferably greater than or equal to 0.75T, preferably less than or equal to 0.9375T, and more preferably less than or equal to 0.9T. Moreover, when the total thickness of the second layer and the third layer is greater than or equal to the above lower limit and less than or equal to the above upper limit, it is possible to suppress the bleed-out of the plasticizer.

The production method of the interlayer film for laminated glass according to the present invention is not particularly limited. In the case of a single-layered interlayer film, an example of the production method of the interlayer film for laminated glass according to the present invention includes a method of extruding a resin composition using an extruder. In the case of a multi-layered interlayer film, examples of the production method of the interlayer film for laminated glass according to the present invention include a method of separately forming respective resin compositions used for constituting respective layers into respective layers, and then, for example, layering the respective obtained layers, a method of extruding respective resin compositions used for constituting respective layers using an extruder and layering the respective layers, and the like. A production method of extrusion-molding is preferred because the method is suitable for continuous production.

It is preferred that the second layer and the third layer contain the same polyvinyl acetal resin, it is more preferred that the second layer and the third layer contain the same polyvinyl acetal resin and the same plasticizer, and it is further preferred that the second layer and the third layer be formed from the same resin composition, since these interlayer films are excellent in production efficiency.

### (Laminated glass)

Fig. 3 shows an example of laminated glass prepared with an interlayer film for laminated glass in accordance with one embodiment of the present invention schematically represented as a cross-sectional view.

A laminated glass 11 shown in Fig. 3 is provided with a first laminated glass member 21, a second laminated glass member 22 and an interlayer film 1. The interlayer film 1 is arranged between the first laminated glass member 21 and the second laminated glass member 22 to be sandwiched.

The first laminated glass member 21 is layered on a first surface 1a of the interlayer film 1. The second laminated glass member 22 is layered on a second surface 1b opposite to the first surface 1a of the interlayer film 1. The first laminated glass member 21 is layered on an outer surface 3a of the second layer 3 of the interlayer film 1. The second laminated glass member 22 is layered on an outer surface 4a of the third layer 4 of the interlayer film 1.

As described above, the laminated glass according to the present invention is provided with the first laminated glass member, the second laminated glass member and the interlayer film arranged between the first laminated glass member and the second laminated glass member, and the interlayer film is the interlayer film for laminated glass according to the present invention.

Examples of the laminated glass member include a glass plate and a PET (polyethylene terephthalate) film and the like. The laminated glass includes not only laminated glass in which an interlayer film is sandwiched between two glass plates but also laminated glass in which an interlayer film is sandwiched between a glass plate and a PET film or the like. Laminated glass is a laminate provided with a glass plate, and it is preferred that at least one glass plate be used. It is preferred that the first laminated glass member and the second laminated glass member be each a glass plate or a PET film and at least one among the first laminated glass member and the second laminated glass member be a glass plate.

Examples of the glass plate include an inorganic glass plate and an organic glass plate. Examples of the inorganic glass plate include float plate glass, heat ray-absorbing plate glass, heat ray-reflecting plate glass, polished plate glass, molded plate glass, wired plate glass, and the like. The organic glass is synthetic resin glass substituted for inorganic glass. Examples of the organic glass plate include a polycarbonate plate, a poly(meth)acrylic resin plate, and the like. Examples of the poly(meth)acrylic resin plate include a polymethyl (meth)acrylate plate, and the like.

The thickness of the laminated glass member is preferably greater than or equal to 1 mm, preferably less than or equal to 5 mm, and more preferably less than or equal to 3 mm. Moreover, in the case where the laminated glass member is a glass plate, the thickness of the glass plate is preferably greater than or equal to 1 mm, preferably less than or equal to 5 mm, and more preferably less than or equal to 3 mm. In the case where the laminated glass member is a PET film, the thickness of the PET film is preferably greater than or equal to 0.03 mm and preferably less than or equal to 0.5 mm.

The production method of the laminated glass is not particularly limited. For example, an interlayer film is sandwiched between the first laminated glass member and the second laminated glass member, and the air remaining between the first laminated glass member and the interlayer film and between the second laminated glass member and the interlayer film is removed by allowing the members to pass through a pressing roll or by putting the members into a rubber bag and allowing the contents to be sucked under reduced pressure. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass can be obtained.

The interlayer film and the laminated glass can be used for automobiles, railway vehicles, aircraft, ships, buildings and the like. The interlayer film and the laminated glass can also be used for applications other than these applications. It is preferred that the interlayer film and the laminated glass be an interlayer film and laminated glass for vehicles or for construction, and it is more preferred that the interlayer film and the laminated glass be an interlayer film and laminated glass for vehicles. The interlayer film and the laminated glass can be used for a windshield, side glass, rear glass or roof glass of an automobile, and the like. The interlayer film and the laminated glass are suitably used for automobiles. The interlayer film is used for obtaining laminated glass for an automobile.

Hereinafter, the present invention will be described in more detail with reference to examples. The present invention is not limited only to these examples.

With regard to the polyvinyl butyral (PVB) resin used in the following examples and comparative examples, the butyralization degree (the acetalization degree), the acetylation degree and the hydroxyl content were measured by a method in accordance with JIS K6728 "Testing methods for polyvinyl butyral". Even in the cases of being measured according to ASTM D1396-92, numerical values similar to those obtained by a method in accordance with JIS K6728 "Testing methods for polyvinyl butyral" were exhibited.

Moreover, the following hindered amine light stabilizers were used in examples and comparative examples.

TINUVIN 765 (available from BASF Japan Ltd., N-C (alkyl group) type, the molecular weight of 509)
TINUVIN 622SF (available from BASF Japan Ltd., N-C (alkyl group) type, the molecular weight of 1000 or more)
ADK STAB LA-81 (available from ADEKA CORPORATION, NOR (alkoxy group) type, the molecular weight of 678)
TINUVIN XT-855FF (available from BASF Japan Ltd., NOR (alkoxy group) type)
TINUVIN 770DF (available from BASF Japan Ltd., N-H (hydrogen atom) type, the molecular weight of 481)
HOSTAVIN N-24 (available from Clariant Japan K.K., N-H (hydrogen atom) type, the molecular weight of 632)
Chimassorb 944FDL (available from BASF Japan Ltd., N-H (hydrogen atom) type, the molecular weight of 1000 or more)

Moreover, the following oxidation inhibitors were used in examples and comparative examples.

BHT (2,6-di-t-butyl-p-cresol, the molecular weight of 220)
IRGANOX 1010 (available from BASF Japan Ltd., an oxidation inhibitor including a phenol skeleton, the molecular weight of 1178)
IRGANOX 245 (available from BASF Japan Ltd., an oxidation inhibitor including a phenol skeleton, the molecular weight of 587)
ADK STAB AO-40 (available from ADEKA CORPORATION, an oxidation inhibitor including a phenol skeleton, the molecular weight of 383)
ADK STAB 3050 (available from ADEKA CORPORATION, an oxidation inhibitor containing phosphorus, the molecular weight of 503)
ADK STAB TPP (available from ADEKA CORPORATION, an oxidation inhibitor containing phosphorus, the molecular weight of 310)
ADK STAB C (available from ADEKA CORPORATION, an oxidation inhibitor containing phosphorus, the molecular weight of 346)
ADK STAB 1500 (available from ADEKA CORPORATION, an oxidation inhibitor containing phosphorus, the molecular weight of 1038)
ADK STAB 135 (available from ADEKA CORPORATION, an oxidation inhibitor containing phosphorus, the molecular weight of 374)
ADK STAB PEP-36 (available from ADEKA CORPORATION, an oxidation inhibitor containing phosphorus, the molecular weight of 633)
SUMIRIZER GP (available from Sumitomo Chemical Co., Ltd., an oxidation inhibitor containing phosphorus and including a phenol skeleton, the molecular weight of 661)

### (Example 1)

### Preparation of Composition X for forming first layer:

One hundred parts by weight of a polyvinyl acetal resin (a polyvinyl butyral (PVB) resin, the average polymerization degree of polyvinyl alcohol (PVA) of 2300, the hydroxyl content of 23.0% by mol, the acetylation degree of 12.5% by mol, the butyralization degree of 64.5% by mol), 60 parts by weight of triethylene glycol di-2-ethylhexanoate (3GO), which is a plasticizer, 0.2 parts by weight of TINUVIN 770DF (available from BASF Japan Ltd., N-H (hydrogen atom) type, the molecular weight of 481), 0.2 parts by weight of BHT (2,6-di-t-butyl-p-cresol, the molecular weight of 220) and 0.2 parts by weight of ADK STAB 3050 (available from ADEKA CORPORATION, an oxidation inhibitor containing phosphorus, the molecular weight of 503) were mixed to obtain Composition X for forming a first layer.

Preparation of Composition Y for forming second layer and third layer:
One hundred parts by weight of a polyvinyl acetal resin (a polyvinyl butyral (PVB) resin, the average polymerization degree of polyvinyl alcohol (PVA) of 1700, the hydroxyl content of 30.0% by mol, the acetylation degree of 1.0% by mol, the butyralization degree of 69.0% by mol), 40 parts by weight of triethylene glycol di-2-ethylhexanoate (3GO), which is a plasticizer, and magnesium in an amount such that the content thereof in the interlayer film becomes 60 ppm were mixed to obtain Composition Y for forming a second layer and a third layer.

### Preparation of interlayer film:

By co-extruding the Composition X for forming a first layer and the Composition Y for forming a second layer and a third layer using a coextruder, an interlayer film (800 µm in thickness) having a layered structure with a stack of a second layer (350 µm in thickness)/a first layer (100 µm in thickness)/a third layer (350 µm in thickness) was prepared.

### Preparation of laminated glass:

The obtained interlayer film (multilayer) was cut into a size of 8 cm in length × 8 cm in width. Next, the interlayer film was sandwiched between two sheets of clear glass (8 cm in length × 8 cm in width × 2.5 mm in thickness), the product was held in a vacuum laminator for 30 minutes at 90°C and pressed under vacuum to obtain a laminate. With regard to the laminate, interlayer film portions protruded from the sheet of glass were cut away to obtain a sheet of laminated glass.

### (Examples 2 to 30 and Comparative Examples 1 to 5)

An interlayer film and a sheet of laminated glass were prepared in the same manner as in Example 1 except that the kind and content of the ingredient included in the first layer, the second layer and the third layer were set to those listed in the following Tables 1 to 5.

### (Example 31)

### Preparation of Composition X for forming interlayer film (first layer):

One hundred parts by weight of a polyvinyl acetal resin (a polyvinyl butyral (PVB) resin, the average polymerization degree of polyvinyl alcohol (PVA) of 1700, the hydroxyl content of 30.0% by mol, the acetylation degree of 1.0% by mol, the butyralization degree of 69.0% by mol), 40 parts by weight of triethylene glycol di-2-ethylhexanoate (3GO), which is a plasticizer, 0.2 parts by weight of TINUVIN 770DF (available from BASF Japan Ltd., N-H (hydrogen atom) type, the molecular weight of 481), 0.2 parts by weight of BHT (2,6-di-t-butyl-p-cresol, the molecular weight of 220), 0.2 parts by weight of ADK STAB 3050 (available from ADEKA CORPORATION, an oxidation inhibitor containing phosphorus, the molecular weight of 503) and magnesium in an amount such that the content thereof in the interlayer film becomes 60 ppm were mixed to obtain Composition X for forming an interlayer film.

### Preparation of interlayer film:

By extruding the composition for forming an interlayer film using an extruder, a single-layered interlayer film (800 µm in thickness) was prepared.

### Preparation of laminated glass:

A sheet of laminated glass was prepared in the same manner as in Example 1 except that the obtained interlayer film was used.

### (Example 32 and Comparative Example 6)

An interlayer film and a sheet of laminated glass were prepared in the same manner as in Example 1 except that the kind and content of the ingredient included in the interlayer film were set to those listed in the following Table 6.

### (Evaluation)

### (1) Glass transition temperature of first layer (multi-layered interlayer film) or interlayer film (single-layered interlayer film)

Kneaded products having respective compositions of the first layer in examples and comparative examples were prepared. The kneaded product prepared was press-molded with a press molding machine to obtain Resin film A with an average thickness of 0.35 mm. The Resin film A obtained was allowed to stand for 2 hours under the condition of 25°C and a relative humidity of 30%. After allowed to stand for 2 hours, the viscoelasticity thereof was measured by means of "ARES-G2" available from TA Instruments Japan Inc. As a jig, a parallel plate with a diameter of 8 mm was used. The measurement was performed under the condition in which the temperature is decreased from 100°C to -30°C at a temperature decreasing rate of 3°C/minute and under the condition of a frequency of 1 Hz and a strain of 1%. In the measurement results obtained, the peak temperature of the loss tangent was defined as the glass transition temperature Tg (°C).

### (2) State of gap formed at end part of sheet of laminated glass

The laminated glass was irradiated with ultraviolet rays (quartz glass mercury lamp (750 W)) for 2000 hours in accordance with JIS R3205 using an ultraviolet-ray irradiation device ("HLG-2S" available from Suga Test Instruments Co., Ltd.). After the test, the end part of the sheet of laminated glass was observed to evaluate the state of a gap formed at the end part of the sheet of laminated glass. The state of the gap was judged according to the following criteria.

### [Criteria for judgment in state of gap]

○: At the end part of the sheet of laminated glass, there is no gap or a gap is formed only within a distance shorter than or equal to 1 mm from the end part in the inwardly facing direction orthogonal to the end side including the end part.

×: At the end part of the sheet of laminated glass, a gap is formed at a distance longer than 1 mm from the end part in the inwardly facing direction orthogonal to the end side including the end part.

### (3) ΔYI value measured at end part of sheet of laminated glass

The sheet of laminated glass obtained was measured for the YI value (the yellow index) by transmission method in accordance with JIS K7105 using a spectrophotometer ("U-4100" available from Hitachi High-Technologies Corporation).

The end part of the sheet of laminated glass was measured for the initial YI value. Next, the laminated glass was heated for 4 weeks at 100°C. After the heating, the end part of the sheet of laminated glass was measured for the YI value after heating. The measurement area of the YI value was defined as an area within a distance of 5 mm from the end part (0-5 mm) in the inwardly facing direction orthogonal to the end side including the end part. The absolute value of the difference between the initial YI value and the YI value after heating was defined as the ΔYI to be determined. The ΔYI value was judged according to the following criteria.

### [Criteria for judgment in ΔYI value]

○: The ΔYI value is less than or equal to 20.

×: The ΔYI value is greater than 20.

### (4) Sound insulating properties

The laminated glass was excited by means of a vibration generator for a damping test ("Vibration exciter G21-005D" available from SHINKEN CO., LTD.) to obtain vibration characteristics, the vibration characteristics were amplified by a mechanical impedance measuring apparatus ("XG-81" available from RION Co., Ltd.), and the vibration spectrum was analyzed by an FFT spectrum analyzer ("FFT analyzer HP3582A" available from Yokogawa Hewlett-Packard, Ltd.).

The results are shown in the following Tables 1 to 6. The content of the polyvinyl acetal resin is set to 100 parts by weight. With regard to the evaluation of sound insulating properties, the sheets of laminated glass in Examples 1 to 30 are excellent in sound insulating properties. Moreover, the content (ppm) of Mg in the interlayer film refers to the content of Mg in the second and third layers in Examples 1 to 30 and Comparative Examples 1 to 5, and refers to the content of Mg in the first layer in Examples 31, 32 and Comparative Example 6. Mg may be added as magnesium acetate or a mixture of magnesium acetate and magnesium 2-ethylbutyrate (the ratio of weight of magnesium acetate : weight of magnesium 2-ethylbutyrate = 50% by weight : 50% by weight).

**[Table 1]**

| | | | Ex. 1 | Ex. 2 | Ex. 3 | Ex. 4 | Ex. 5 | Ex. 6 | Ex. 7 | Ex. 8 |
|---|---|---|---|---|---|---|---|---|---|---|
| | Polyvinyl acetal resin | Acetalization degree | 64.5 | 64.5 | 64.5 | 64.5 | 64.5 | 64.5 | 64.5 | 64.5 |
| | | Hydroxyl content | 23 | 23 | 23 | 23 | 23 | 23 | 23 | 23 |
| | | Acetylation degree | 12.5 | 12.5 | 12.5 | 12.5 | 12.5 | 12.5 | 12.5 | 12.5 |
| | | Average polymerization degree | 2300 | 2300 | 2300 | 2300 | 2300 | 2300 | 2300 | 2300 |
| | Plasticizer | Kind | 3GO | 3GO | 3GO | 3GO | 3GO | 3GO | 3GO | 3GO |
| | | Content (Parts by weight) | 60 | 60 | 60 | 60 | 60 | 60 | 60 | 60 |
| | HALS | Kind | N-H type | N-C type | N-C type | N-OR type | N-OR type | N-H type | N-C type | N-OR type |
| | | | TINUVIN 770DF | TINUVIN 765 | TINUVIN 622SF | ADK STAB LA-81 | TINUVIN XT-855FF | TINUVIN 770DF | TINUVIN 765 | TINUVIN XT-855FF |
| | | Content (Parts by weight) | 0.2 | 0.2 | 0.2 | 0.2 | 0.2 | 0.1 | 0.1 | 0.1 |
| | | Kind | - | - | - | - | - | N-H type | N-C type | N-C type |
| First layer | | | - | - | - | - | - | Chimassorb 944FDL | TINUVIN 622SF | TINUVIN 765 |
| | | Content (Parts by weight) | - | - | - | - | - | 0.1 | 0.1 | 0.1 |
| | Oxidation inhibitor | Kind | BHT | BHT | BHT | BHT | BHT | BHT | BHT | BHT |
| | | Content (Parts by weight) | 0.2 | 0.2 | 0.2 | 0.2 | 0.2 | 0.2 | 0.2 | 0.2 |
| | | Kind | - | - | - | - | - | - | - | - |
| | | Content (Parts by weight) | - | - | - | - | - | - | - | - |
| | | Kind | ADK STAB 3050 | ADK STAB 3050 | ADK STAB 3050 | ADK STAB 3050 | ADK STAB 3050 | ADK STAB 3050 | ADK STAB 3050 | ADK STAB 3050 |
| | | Content (Parts by weight) | 0.2 | 0.2 | 0.2 | 0.2 | 0.2 | 0.2 | 0.2 | 0.2 |
| Second and third layers | Polyvinyl acetal resin | Acetalization degree | 69 | 69 | 69 | 69 | 69 | 69 | 69 | 69 |
| | | Hydroxyl content | 30 | 30 | 30 | 30 | 30 | 30 | 30 | 30 |
| | | Acetylation degree | 1 | 1 | 1 | 1 | 1 | 1 | 1 | 1 |
| | | Average polymerization degree | 1700 | 1700 | 1700 | 1700 | 1700 | 1700 | 1700 | 1700 |
| | Plasticizer | Kind | 3GO | 3GO | 3GO | 3GO | 3GO | 3GO | 3GO | 3GO |
| | | Content (Parts by weight) | 40 | 40 | 40 | 40 | 40 | 40 | 40 | 40 |
| Content of Mg in the interlayer film (ppm) | | | 60 | 60 | 60 | 60 | 60 | 60 | 60 | 60 |
| (1) Glass transition temperature of the first layer (°C) | | | 2 | 2 | 2 | 2 | 2 | 2 | 2 | 2 |
| (2) State of gap | | | ○ | ○ | ○ | ○ | ○ | ○ | ○ | ○ |
| (3) ΔYI value | | 0-5mm | 12.1 | 2.1 | 2 | 1.6 | 1.5 | 13.5 | 2 | 1.7 |
| | | Judgment | ○ | ○ | ○ | ○ | ○ | ○ | ○ | ○ |

**[Table 2]**

| | | | Ex. 9 | Ex. 10 | Ex. 11 | Ex. 12 | Ex. 13 | Ex. 14 | Ex. 15 | Ex. 16 | Ex. 17 |
|---|---|---|---|---|---|---|---|---|---|---|---|
| | Polyvinyl acetal resin | Acetalization degree | 64.5 | 64.5 | 64.5 | 64.5 | 64.5 | 64.5 | 64.5 | 64.5 | 64.5 |
| | | Hydroxyl content | 23 | 23 | 23 | 23 | 23 | 23 | 23 | 23 | 23 |
| | | Acetylation degree | 12.5 | 12.5 | 12.5 | 12.5 | 12.5 | 12.5 | 12.5 | 12.5 | 12.5 |
| | | Average polymerization degree | 2300 | 2300 | 2300 | 2300 | 2300 | 2300 | 2300 | 2300 | 2300 |
| | Plasticizer | Kind | 3GO | 3GO | 3GO | 3GO | 3GO | 3GO | 3GO | 3GO | 3GO |
| | | Content (Parts bv weight) | 60 | 60 | 60 | 60 | 60 | 60 | 60 | 60 | 60 |
| | HALS | Kind | N-C type | N-C type | N-OR type | N-OR type | N-C type | N-C type | N-C type | N-C type | N-C type |
| | | | TINUVIN 765 | TINUVIN 765 | TINUVIN XT-855FF | TINUVIN XT-855FF | TINUVIN 765 | TINUVIN 765 | TINUVIN 765 | TINUVIN 765 | TINUVIN 765 |
| First layer | | Content (Parts by weight) | 0.02 | 0.5 | 0.02 | 0.5 | 0.2 | 0.2 | 0.2 | 0.2 | 0.2 |
| | | Kind | - | - | - | - | - | - | - | - | - |
| | | | - | - | - | - | - | - | - | - | - |
| | | Content (Parts by weight) | - | - | - | - | - | - | - | - | - |
| | Oxidation inhibitor | Kind | BHT | BHT | BHT | BHT | BHT | BHT | BHT | BHT | BHT |
| | | Content (Parts bv weight) | 0.2 | 0.2 | 0.2 | 0.2 | 0.01 | 0.01 | 0.01 | 0.01 | 0.01 |
| | | Kind | - | - | - | - | - | - | - | - | - |
| | | Content (Parts bv weiaht) | - | - | - | - | - | - | - | - | - |
| | | Kind | ADK STAB 3050 | ADK STAB 3050 | ADK STAB 3050 | ADK STAB 3050 | ADK STAB 3050 | ADK STAB 3050 | ADK STAB 3050 | ADK STAB 3050 | ADK STAB 3050 |
| | | Content (Parts by weight) | 0.2 | 0.2 | 0.2 | 0.2 | 0.2 | 0.2 | 0.2 | 0.05 | 0.5 |
| Second and third layers | Polyvinyl acetal resin | Acetalization degree | 69 | 69 | 69 | 69 | 69 | 69 | 69 | 69 | 69 |
| | | Hydroxyl content | 30 | 30 | 30 | 30 | 30 | 30 | 30 | 30 | 30 |
| | | Acetylation degree | 1 | 1 | 1 | 1 | 1 | 1 | 1 | 1 | 1 |
| | | Average polymerization degree | 1700 | 1700 | 1700 | 1700 | 1700 | 1700 | 1700 | 1700 | 1700 |
| | Plasticizer | Kind | 3GO | 3GO | 3GO | 3GO | 3GO | 3GO | 3GO | 3GO | 3GO |
| | | Kind Content (Parts by weight) | 40 | 40 | 40 | 40 | 40 | 40 | 40 | 40 | 40 |
| Content of Mg in the interlayer film (ppm) | | | 60 | 60 | 60 | 60 | 60 | 5 | 100 | 60 | 60 |
| (1) Glass transition temperature of the first layer (°C) | | | 2 | 2 | 2 | 2 | 2 | 2 | 2 | 2 | 2 |
| (2) State of gap | | | ○ | ○ | ○ | ○ | ○ | ○ | ○ | ○ | ○ |
| (3) ΔYI value | | 0-5mm | 1.9 | 3.2 | 1.8 | 3.1 | 0.9 | 2 | 2.5 | 2.1 | 1.9 |
| | | Judgment | ○ | ○ | ○ | ○ | ○ | ○ | ○ | ○ | ○ |

**[Table 3]**

| | | | Ex. 18 | Ex. 19 | Ex. 20 | Ex. 21 | Ex. 22 | Ex. 23 | Ex. 24 | Ex. 25 | Ex. 26 |
|---|---|---|---|---|---|---|---|---|---|---|---|
| | Polyvinyl acetal resin | Acetalization degree | 64.5 | 64.5 | 64.5 | 64.5 | 64.5 | 64.5 | 64.5 | 64.5 | 64.5 |
| | | Hydroxyl content | 23 | 23 | 23 | 23 | 23 | 23 | 23 | 23 | 23 |
| | | Acetylation degree | 12.5 | 12.5 | 12.5 | 12.5 | 12.5 | 12.5 | 12.5 | 12.5 | 12.5 |
| | | Average polymerization degree | 2300 | 2300 | 2300 | 2300 | 2300 | 2300 | 2300 | 2300 | 2300 |
| | Plasticizer | Kind | 3GO | 3GO | 3GO | 3GO | 3GO | 3GO | 3GO | 3GO | 3GO |
| | | Content (Parts by weight) | 60 | 60 | 60 | 60 | 60 | 60 | 60 | 60 | 60 |
| | HALS | Kind | N-C type | N-C type | N-C type | N-C type | N-C type | N-C type | N-C type | N-C type | N-C type |
| | | | TINUVIN 765 | TINUVIN 765 | TINUVIN 765 | TINUVIN 765 | TINUVIN 765 | TINUVIN 765 | TINUVIN 765 | TINUVIN 765 | TINUVIN 765 |
| | | Content (Parts by weight) | 0.2 | 0.2 | 0.2 | 0.2 | 0.2 | 0.2 | 0.2 | 0.2 | 0.2 |
| First layer | | Kind | - | - | - | - | - | - | - | - | - |
| | | | - | - | - | - | - | - | - | - | - |
| | | Content (Parts by weight) | - | - | - | - | - | - | - | - | - |
| | Oxidation inhibitor | Kind | BHT | BHT | BHT | BHT | BHT | BHT | BHT | BHT | BHT |
| | | Content (Parts by weight) | 0.05 | 0.05 | 0.05 | 0.2 | 0.2 | 0.2 | 0.2 | 0.2 | 0.2 |
| | | Kind | IRGANOX 1010 | IRGANOX 245 | ADK STAB AO-40 | - | - | - | - | - | - |
| | | Content (Parts by weight) | 0.2 | 0.2 | 0.2 | - | - | - | - | - | - |
| | | Kind | ADK STAB 3050 | ADK STAB 3050 | ADK STAB 3050 | ADK STAB TPP | ADK STAB C | ADK STAB 1500 | ADK STAB 135 | ADK STAB PEP-36 | SUMIRIZER GP |
| | | Content (Parts bv weight) | 0.2 | 0.2 | 0.2 | 0.2 | 0.2 | 0.2 | 0.2 | 0.1 | 0.2 |
| Second and third layers | Polyvinyl acetal resin | Acetalization degree | 69 | 69 | 69 | 69 | 69 | 69 | 69 | 69 | 69 |
| | | Hydroxyl content | 30 | 30 | 30 | 30 | 30 | 30 | 30 | 30 | 30 |
| | | Acetylation degree | 1 | 1 | 1 | 1 | 1 | 1 | 1 | 1 | 1 |
| | | Average polymerization degree | 1700 | 1700 | 1700 | 1700 | 1700 | 1700 | 1700 | 1700 | 1700 |
| | Plasticizer | Kind | 3GO | 3GO | 3GO | 3GO | 3GO | 3GO | 3GO | 3GO | 3GO |
| | | Content (Parts by weight) | 40 | 40 | 40 | 40 | 40 | 40 | 40 | 40 | 40 |
| Content of Mg in the interlayer film (ppm) | | | 60 | 60 | 60 | 60 | 60 | 60 | 60 | 60 | 60 |
| (1) Glass transition temperature of the first layer (°C) | | | 2 | 2 | 2 | 2 | 2 | 2 | 2 | 2 | 2 |
| (2) State of gap | | | ○ | ○ | ○ | ○ | ○ | ○ | ○ | ○ | ○ |
| (3) ΔYI value | | 0-5mm | 2.1 | 2.4 | 2.3 | 1.8 | 2.8 | 1.9 | 3.8 | 1.1 | 4.2 |
| | | Judgment | ○ | ○ | ○ | ○ | ○ | ○ | ○ | ○ | ○ |

**[Table 4]**

| | | | Ex. 27 | Ex. 28 | Ex. 29 | Ex. 30 |
|---|---|---|---|---|---|---|
| | Polyvinyl acetal resin | Acetalization degree | 54 | 67.2 | 64.5 | 64.5 |
| | | Hydroxyl content | 21 | 25.2 | 23 | 23 |
| | | Acetylation degree | 25 | 7.6 | 12.5 | 12.5 |
| | | Average polymerization degree | 2300 | 1700 | 2300 | 2300 |
| | Plasticizer | Kind | 3GO | 3GO | 3GO | 3GO |
| | | Content (Parts by weight) | 60 | 60 | 40 | 90 |
| | HALS | Kind | N-C type | N-C type | N-C type | N-C type |
| | | | TINUVIN 765 | TINUVIN 765 | TINUVIN 765 | TINUVIN 765 |
| | | Content (Parts by weight) | 0.2 | 0.2 | 0.2 | 0.2 |
| First layer | | Kind | - | - | - | - |
| | | | - | - | - | - |
| | | Content (Parts by weight) | - | - | - | - |
| | Oxidation inhibitor | Kind | BHT | BHT | BHT | BHT |
| | | Content (Parts by weight) | 0.2 | 0.2 | 0.2 | 0.2 |
| | | Kind | - | - | - | - |
| | | Content (Parts by weight) | - | - | - | - |
| | | Kind | ADK STAB 3050 | ADK STAB 3050 | ADK STAB 3050 | ADK STAB 3050 |
| | | Content (Parts by weight) | 0.2 | 0.2 | 0.2 | 0.2 |
| Second and third layers | Polyvinyl acetal resin | Acetalization degree | 69 | 69 | 69 | 69 |
| | | Hydroxyl content | 30 | 30.2 | 30 | 30 |
| | | Acetylation degree | 1 | 0.8 | 1 | 1 |
| | | Average polymerization degree | 1700 | 1700 | 1700 | 1700 |
| | Plasticizer | Kind | 3GO | 3GO | 3GO | 3GO |
| | | Content (Parts by weight) | -3 | 8 | 40 | 40 |
| Content of Mg in the interlayer film (ppm) | | | 60 | 60 | 60 | 60 |
| (1) Glass transition temperature of the first layer (°C) | | | 2 | 8 | 12 | -12 |
| (2) State of gap | | | ○ | ○ | ○ | ○ |
| (3) ΔYI value | | 0-5mm | 2.3 | 1.9 | 1.8 | 5 |
| | | Judgment | ○ | ○ | ○ | ○ |

**[Table 5]**

| | | | Comp. Ex. 1 | Comp. Ex. 2 | Comp. Ex. 3 | Comp. Ex. 7 | Comp. Ex. 5 |
|---|---|---|---|---|---|---|---|
| | Polyvinyl acetal resin | Acetalization degree | 64.5 | 64.5 | 64.5 | 64,5 | 64.5 |
| | | Hydroxyl content | 23 | 23 | 23 | 23 | 23 |
| | | Acetylation degree | 12.5 | 12.5 | 12.5 | 12.5 | 12.5 |
| | | Average polymerization degree | 2300 | 2300 | 2300 | 2300 | 2300 |
| | Plasticizer | Kind | 3GO | 3GO | 3GO | 3GO | 3GO |
| | | Content (Parts by weight) | 60 | 60 | 60 | 60 | 60 |
| | HALS | Kind | - | N-H type | N-H type | N-H type | N-H type |
| | | | - | TINUVIN 770DF | TINUVIN 770DF | HOSTAVIN N-24 | Chimassorb 944FDL |
| First layer | | Content (Parts by weight) | - | 0.2 | 0.02 | 0.2 | 0.2 |
| | | Kind | - | - | - | - | - |
| | | | - | - | - | - | - |
| | | Content (Parts by weight) | - | - | - | - | - |
| | Oxidation inhibitor | Kind | BHT | BHT | BHT | BHT | BHT |
| | | Content (Parts by weight) | 0.2 | 0.2 | 0.2 | 0.2 | 0.2 |
| | | Kind | - | - | - | - | - |
| | | Content (Parts by weight) | - | - | - | - | - |
| | | Kind | - | - | - | - | - |
| | | Content (Parts by weight) | - | - | - | - | - |
| Second and third layers | Polyvinyl acetal resin | Acetalization degree | 69 | 69 | 69 | 69 | 69 |
| | | Hydroxyl content | 30 | 30 | 30 | 30 | 30 |
| | | Acetylation degree | 1 | 1 | 1 | 1 | 1 |
| | | Average polymerization degree | 1700 | 1700 | 1700 | 1700 | 1700 |
| | Plasticizer | Kind | 3GO | 3GO | 3GO | 3GO | 3GO |
| | | Content (Parts by weight) | 40 | 40 | 40 | 40 | 40 |
| Content of Mg in the interlayer film (ppm) | | | 60 | 60 | 60 | 60 | 60 |
| (1) Glass transition temperature of the first layer (°C) | | | 2 | 2 | 2 | 2 | 2 |
| (2) State of gap | | | × | ○ | ○ | ○ | ○ |
| (3) ΔYI value | | 0-5mm | 1.9 | 74 | 25.4 | 65.1 | 60.1 |
| | | Judgment | ○ | × | × | × | × |

**[Table 6]**

| | | | Ex. 31 | Ex. 32 | Comp. Ex. 6 |
|---|---|---|---|---|---|
| | Polyvinyl acetal resin | Acetalization degree | 69 | 69 | 69 |
| | | Hydroxyl content | 30 | 30 | 30 |
| | | Acetylation degree | 1 | 1 | 1 |
| | | Average polymerization degree | 1700 | 1700 | 1700 |
| | Plasticizer | Kind | 3GO | 3GO | 3GO |
| | | Content (Parts by weight) | 40 | 40 | 40 |
| | HALS | Kind | N-H type | N-C type | N-H type |
| | | | TINUVIN 770DF | TINUVIN 765 | TINUVIN 770DF |
| Interlayer film (First layer) | | Content (Parts by weight) | 0.2 | 0.2 | 0.2 |
| | | Kind | - | - | - |
| | | | - | - | - |
| | | Content (Parts by weight) | - | - | - |
| | Oxidation inhibitor | Kind | BHT | BHT | BHT |
| | | Content (Parts by weight) | 0.2 | 0.2 | 0.2 |
| | | Kind | - | - | - |
| | | Content (Parts by weight) | - | - | - |
| | | Kind | ADK STAB 3050 | ADK STAB 3050 | - |
| | | Content (Parts by weight) | 0.2 | 0.2 | - |
| Content of Mg in the interlayer film (ppm) | | | 60 | 60 | 60 |
| (1) Glass transition temperature of the first layer (°C) | | | 28 | 28 | 28 |
| (2) State of gap | | | ○ | ○ | ○ |
| (3) ΔYI value | | 0-5mm | 7.4 | 2 | 80.7 |
| | | Judgment | ○ | ○ | × |

### EXPLANATION OF SYMBOLS

1: Interlayer film
1a: First surface
1b: Second surface
2: First layer
2a: First surface
2b: Second surface
3: Second layer
3a: Outer surface
4: Third layer
4a: Outer surface
11: Laminated glass
21: First laminated glass member
22: Second laminated glass member
31: Interlayer film

## Claims

1. An interlayer film for laminated glass comprising
a first layer having a glass transition temperature of lower than or equal to 30 °C and including a polyvinyl acetal resin, a plasticizer, a hindered amine light stabilizer and an oxidation inhibitor containing phosphorus and having a molecular weight of greater than or equal to 200 and less than or equal to 1500,
a second layer being arranged on a first surface side of the first layer and including a polyvinyl acetal resin and a plasticizer, and a third layer being arranged on a second surface side opposite to the first surface side of the first layer and including a polyvinyl acetal resin and a plasticizer.

2. The interlayer film for laminated glass according to claim 1,
wherein a content of the plasticizer included in the first layer relative to 100 parts by weight of the polyvinyl acetal resin included in the first layer is greater than a content of the plasticizer included in the second layer relative to 100 parts by weight of the polyvinyl acetal resin included in the second layer.

3. The interlayer film for laminated glass according to claim 1 or 2,
wherein the polyvinyl acetal resin included in the first layer is obtained by acetalizing polyvinyl alcohol having an average polymerization degree greater than or equal to 1500.

4. The interlayer film for laminated glass according to any one of claims 1 to 3,
wherein an acetylation degree of the polyvinyl acetal resin included in the first layer is greater than or equal to 0.1 % by mol and less than or equal to 25 % by mol, and
a hydroxyl content of the polyvinyl acetal resin included in the first layer is greater than or equal to 20 % by mol and less than 30 % by mol.

5. The interlayer film for laminated glass according to any one of claims 1 to 4, further comprising an oxidation inhibitor including a phenol skeleton in the interlayer film as a whole.

6. The interlayer film for laminated glass according to any one of claims 1 to 4,
wherein the first layer further includes an oxidation inhibitor including a phenol skeleton.

7. The interlayer film for laminated glass according to claim 5 or 6,
wherein the oxidation inhibitor including a phenol skeleton has a molecular weight of greater than or equal to 250.

8. The interlayer film for laminated glass according to any one of claims 1 to 7, which is used for obtaining laminated glass for an automobile.

9. A laminated glass, comprising:
a first laminated glass member,
a second laminated glass member, and
the interlayer film for laminated glass according to any one of claims 1 to 8,
wherein the interlayer film for laminated glass is arranged between the first laminated glass member and the second laminated glass member.

## Patentansprüche

1. Zwischenschichtfolie für Verbundglas, umfassend
eine erste Schicht, die eine Glasübergangstemperatur von niedriger als oder gleich 30 °C aufweist und ein Polyvinylacetalharz, einen Weichmacher, einen gehinderten Amin-Lichtstabilisator und einen Phosphor enthaltenden Oxidationshemmer einschließt, der eine Molekülmasse von größer als oder gleich 200 und weniger als oder gleich 1500 aufweist,
eine zweite Schicht, die auf einer ersten Oberflächenseite der ersten Schicht angeordnet ist und ein Polyvinylacetalharz und einen Weichmacher einschließt, und eine dritte Schicht, die auf einer zweiten Oberflächenseite gegenüber der ersten Oberflächenseite der ersten Schicht angeordnet ist und ein Polyvinylacetalharz und einen Weichmacher einschließt.

2. Zwischenschichtfolie für Verbundglas nach Anspruch 1,
wobei ein Gehalt des in der ersten Schicht eingeschlossenen Weichmachers relativ zu 100 Gewichtsteilen des in der ersten Schicht eingeschlossenen Polyvinylacetalharzes größer ist als ein Gehalt des in der zweiten Schicht eingeschlossenen Weichmachers relativ zu 100 Gewichtsteilen des in der zweiten Schicht eingeschlossenen Polyvinylacetalharzes.

3. Zwischenschichtfolie für Verbundglas nach Anspruch 1 oder 2,
wobei das in der ersten Schicht eingeschlossene Polyvinylacetalharz durch Acetylieren von Polyvinylalkohol mit einem durchschnittlichen Polymerisationsgrad von größer als oder gleich 1500 erhalten wird.

4. Zwischenschichtfolie für Verbundglas nach einem der Ansprüche 1 bis 3,
wobei ein Acetylierungsgrad des in der ersten Schicht eingeschlossenen Polyvinylacetalharzes größer als oder gleich 0,1 Mol-% und kleiner als oder gleich 25 Mol-% ist und
ein Hydroxylgehalt des in der ersten Schicht eingeschlossenen Polyvinylacetalharzes größer als oder gleich 20 Mol-% und kleiner als 30 Mol-% ist.

5. Zwischenschichtfolie für Verbundglas nach einem der Ansprüche 1 bis 4, ferner umfassend einen ein Phenolgerüst einschließenden Oxidationshemmer in der Zwischenschichtfolie als Ganzes.

6. Zwischenschichtfolie für Verbundglas nach einem der Ansprüche 1 bis 4,
wobei die erste Schicht ferner einen ein Phenolgerüst einschließenden Oxidationshemmer einschließt.

7. Zwischenschichtfolie für Verbundglas nach Anspruch 5 oder 6,
wobei der ein Phenolgerüst einschließende Oxidationshemmer eine Molekülmasse von größer als oder gleich 250 aufweist.

8. Zwischenschichtfolie für Verbundglas nach einem der Ansprüche 1 bis 7, die zum Erhalten von Verbundglas für ein Automobil verwendet wird.

9. Verbundglas, umfassend:
ein erstes Verbundglaselement,
ein zweites Verbundglaselement und
die Zwischenschichtfolie für Verbundglas nach einem der Ansprüche 1 bis 8,
wobei die Zwischenschichtfolie für Verbundglas zwischen dem ersten Verbundglaselement und dem zweiten Verbundglaselement angeordnet ist.

## Revendications

1. Un film intercouche pour verre feuilleté comprenant une première couche ayant une température de transition vitreuse en dessous de ou égale à 30 °C et contenant une résine de polyvinylacétal, un plastifiant, un stabilisant à la lumière d'amine encombrée et un inhibiteur d'oxydation contenant du phosphore et ayant un poids moléculaire supérieur ou égal à 200 ou inférieur ou égal à 1500,
une seconde couche étant disposée sur un premier côté de surface de la première couche et comprenant une résine de polyvinylacétal et un plastifiant, et une troisième couche étant disposée sur un second côté de surface opposé au premier côté de surface de la première couche et comprenant une résine de polyvinylacétal et un plastifiant.

2. Le film intercouche pour verre feuilleté selon la revendication 1,
dans lequel une teneur du plastifiant compris dans la première couche par rapport à 100 parties en poids de la résine de polyvinylacétal comprise dans la première couche est supérieure à une teneur du plastifiant compris dans la seconde couche par rapport à 100 parties en poids de la résine de polyvinylacétal comprise dans la seconde couche.

3. Le film intercouche pour verre feuilleté selon la revendication 1 ou 2,
dans lequel la résine de polyvinylacétal comprise dans la première couche est obtenue par une acétylisation d'un alcool polyvinylique ayant un degré de polymérisation moyen supérieur ou égal à 1500.

4. Le film intercouche pour verre laminé selon l'une quelconque des revendications 1 à 3,
dans lequel un degré d'acétylisation de la résine de polyvinylacétal comprise dans la première couche est supérieur ou égal à 0,1 % en moles et inférieur ou égal à 25 % en moles, et
une teneur en hydroxyle de la résine de polyvinylacétal comprise dans la première couche est supérieure ou égale à 20 % en moles et inférieure à 30 % en moles.

5. Le film intercouche pour verre laminé selon l'une quelconque des revendications 1 à 4, comprenant en outre un inhibiteur d'oxydation incluant un squelette de phenole dans le film intercouche dans son ensemble.

6. Le film intercouche pour verre feuilleté selon l'une quelconque des revendications 1 à 4,
dans lequel la première couche comprend en outre un inhibiteur d'oxydation comprenant un squelette de phénol.

7. Le film intercouche pour verre feuilleté selon la revendication 5 ou 6,
dans lequel l'inhibiteur d'oxydation comprenant un squelette de phénole a un poids moléculaire supérieur ou égal à 250.

8. Le film intercouche pour verre feuilleté selon l'une quelconque des revendications 1 à 7, qui est utilisé pour obtenir du verre feuilleté pour une automobile.

9. Un verre feuilleté comprenant:
un premier élément en verre feuilleté,
un deuxième élément en verre feuilleté, et
le film intercouche pour verre feuilleté selon l'une quelconque des revendications 1 à 8,
dans lequel le film intercouche pour verre feuilleté est disposé entre le premier élément de verre feuilleté et le second élément de verre feuilleté.
